# EUROPÄISCHE PATENTSCHRIFT

(11) **EP 1 702 742 B1**
(45) Veröffentlichungstag und Bekanntmachung des Hinweises auf die Patenterteilung: **23.04.2008**
(21) Anmeldenummer: 05005007.9
(22) Anmeldetag: 08.03.2005
(51) Int. Cl.: B29C 51/04, B29C 51/46

(54) **Verfahren zum Thermoformen von Kunststofffolien**
Process for thermoforming of plastic films
Procédé pour thermoformage de film plastique

(43) Veröffentlichungstag der Anmeldung: 20.09.2006
(73) Patentinhaber: Gabler Thermoform GmbH & Co. KG, 23568 Lübeck (DE)
(72) Erfinder: Grolla, Peter, 23562 Lübeck (DE); Rowedder, Axel, 23623 Ahrensbök (DE)
(74) Vertreter: Grosse, Wolf-Dietrich Rüdiger

(56) Entgegenhaltungen:
- EP-A- 0 564 382
- EP-A- 1 046 489
- EP-A- 1 106 330

## Beschreibung

Die Erfindung betrifft ein Verfahren zum Betreiben einer Vorrichtung zum Herstellen von Formteilen, die aus einer im intermittierenden Transport zwischen ein aus einem Oberwerkzeug und einem Unterwerkzeug bestehenden Werkzeug zugeführten, erwärmten thermoplastischen Kunststofffolie mittels Druckluft unter Zuhilfenahme von nach dem Schließen des Werkzeugs pro Formnest in die Kunststofffolie eintauchenden, von einer Antriebseinrichtung beaufschlagten Vorstreckern tief gezogen werden.

Bei einem solchen Thermoprozeß wird die erwärmte Kunststofffolie durch das schließende Werkzeug und insbesondere einen darin federnd gelagerten Niederhalter eingespannt. Anschließend wird die Kunststofffolie zunächst mechanisch vorgestreckt und anschließend durch Druckluft gemäß einer Negativform verformt. Eine hierzu eingesetzte Thermoformmaschine mit einer Stanzstation bzw. kombinierter Form-/Stanzstation ist durch die EP 1 300 234 A1 bekanntgeworden. Die elektromotorische Vorstrecker-Antriebseinrichtung, statt alternativ ein hydraulischer oder pneumatischer Verfahrantrieb, umfasst einen Servomotor, der integriert einen Drehgeber oder Resolver sowie optional eine Betriebsbremse aufweist und über eine angetriebene Spindel, vorzugsweise eine Kugelrollspindel, ein mit den Vorstreckern ausgerüstetes, geführtes Tragmittel verstellt.

Eine Besonderheit des Thermoformprozesses besteht darin, daß die Druckluft aus verfahrenstechnischen Gründen die Folienoberseite erst dann beaufschlagen kann, wenn sich die Vorstrecker im unteren Totpunkt bzw. unmittelbar davor befinden. Die Kunststofffolie legt sich an die gekühlte, von dem Werkzeug bereitgestellte Form (Formnest) an und kühlt aus, wobei die Kühlung eine gewisse Zeit in Anspruch nimmt. Während dieser Zeit fahren die Vorstrecker wieder in ihre Position im oberen Totpunkt, d.h. in ihre Ausgangslage zurück. Unmittelbar nach dem Kühlen wird das hergestellte Formteil bzw. der Artikel durch einen weiteren vertikalen Kurzhub ausgestanzt (Kombi-Durchfallschnitt-Verfahren), anschließend das Werkzeug geöffnet und die fertigen Formteile bzw. Artikel ausgeworfen. Ein alternatives Verfahren sieht vor, daß das Werkzeug ohne Stanzvorgang geöffnet und die Formteile mit der Kunststofffolie aus dem Werkzeug zu einer nachgeschalteten Stanze transportiert werden (getrenntes Formen/Stanzen) oder partiell gestanzt und mit verbleibenden Haltepunkten zwischen der Kunststofffolie und den Formteilen zu einer nachgeschalteten Stapelstation transportiert werden (Kombi-Bandstahl-Verfahren).

Die für die Zykluszeit und somit Ausstoßleistung bestimmenden Kriterien sind die produktspezifische Kühlzeit und die Vorstreckzeit, die zusammen die produktspezifische Formzeit bilden. Die Formzeit hängt weiterhin ab von der Artikelgeometrie, dem Folienmaterial, der Foliendicke und dem Verfahrweg des Vorstreckers, wie außerdem auch die Maschinenzykluszeit bestimmend für die Ausstoßleistung ist.

Es ist beim Thermoformprozeß ein grundsätzliches Bestreben, den Materialeinsatz für die zu produzierenden Formteile bzw. Artikel zu minimieren, weil das Material in der Massenfertigung einen für den Preis wesentlichen Faktor ausmacht. Gleichwohl muß eine erforderliche Steifigkeit der Formteile eingehalten werden, weil ein sogenannter Top load, d.h. eine vertikale zulässige Stauchkraft vorgegeben wird, welche beispielsweise zur objektiven Beurteilung der Stapelbarkeit der gefüllten Formteile dient. Hierbei stellt sich beim Thermoformen als problematisch dar, daß die Artikelform aus einer Folie tiefgezogen wird, die Materialverteilung am gesamten Formteil aber möglichst gleichmäßig sein soll bzw. bei einer entsprechend geringen Materialausgangsdicke sogar gleichmäßig sein muß. Das bei einem Tiefziehverhältnis, das sich aus der Ziehtiefe zum Folienrondendurchmesser bestimmt und beim Thermoformen bis zu 2 beträgt.

Aus den vorgenannten Kriterien und Eigenschaften ergibt sich, daß die mechanische Vorstreckfunktion einen entscheidenden Einfluß auf die Artikelqualität bzw. die erforderliche Materialausgangsdicke nimmt. Dies insbesondere bei der Verarbeitung von Polypropylen (PP), das als Werkstoff wegen der Kostenvortelle zu anderen thermoformbaren Kunststoffen bevorzugt eingesetzt wird. Polypropylen gehört zu der Gruppe der teilkristallinen Kunststoffe, die die Besonderheit haben, daß die für die Verformung nutzbare Temperaturspanne nur wenige Grad beträgt, und zwar für PP ca. 5°C. Dies hat zur Folge, daß beim Schließen des Werkzeugs der Randbereich des Formteils durch einerseits die gekühlten Kontaktflächen des Niederhalters und andererseits dessen Gegenkontur im Unterwerkzeug, beim Kombi-Durchfallschnitt-Verfahren der Schnittstempel, abgekühlt wird. Die Vorstrecker können hier nur noch begrenzt Material heraus- bzw. nachziehen, insbesondere auch deshalb, weil sie unmittelbar über der eingespannten Kunststofffolie in ihrem oberen Totpunkt bereitstehen und erst nach dem Schließen des Werkzeugs beginnen, in die Kunststofffolie einzutauchen und diese zu verrecken.

Als Nachteil bei diesem Verfahren wurde hingenommen, daß relativ viel Zeit benötigt wird, denn die Vorstreckerantriebsachse muß zunächst beschleunigt werden, so daß das Vorstrecken ungleichförmig erfolgt und relativ viel Zeit erfordert. Während dieser Zeit ist der eingespannte Folienabschnitt allerdings zu einem Großteil ausgekühlt und kann zumindest nicht mehr dünn gezogen werden. Begründet durch die Verfahrcharakteristik der Vorstrecker macht sich der nicht konstante Vorstreckprozeß zudem auch im Wandungsbereich des Artikels nachteilig bemerkbar. Durch die lange Vorstreckzeit und das anschließende Beschleunigen der Vorstrecker wird der Fließprozeß negativ beeinflusst. Dies lässt sich objektiv durch Dünnstellen im Wandungsbereich feststellen, welche durch Messen der Top load erkenntlich werden und subjektiv, insbesondere bei transparenten Artikeln, durch sichtbare Absätze im Wandungsbereich

Durch die EP 1 046 489 A2 ist es bekannt geworden, die Streckhelfer während der Abwärtsbewegung zusätzlich zu der von einem Vorstreckerantrieb erzeugten Schubkraft mit einer pneumatisch erzeugten Kraft zu beaufschlagten.

Aus der EP 1 106 330 A1 ist es für eine Thermoformmaschine bekannt, zur Verwirklichung der zeitlichen Abhängigkeit der Absenkbewegung eines Vorstreckers und eines Niederhalters die Antriebe des Vorstreckers und eines Gegenhalters zu synchronisieren.

Schließlich lehrt die EP 0 564 382 A1, einen in eine Thermofolie eintauchenden Umformstempel mit entweder kontrollierter linearer, verzögerter oder beschleunigter Bewegung bzw. kombinierter linearer Bewegung über die gesamte Wegstrecke zu verfahren.

Der Erfindung liegt daher die Aufgabe zugrunde, ein gattungsgemäßes Verfahren zu schaffen, mit dem sich die genannten Nachteile vermeiden lassen, und das insbesondere verringerte Zykluszeiten mit einer entsprechend größeren Ausstoßleistung sowie eine verbesserte Materialverteilung und einen geringeren Materialeinsatz ermöglicht.

Diese Aufgabe wird erfindungsgemäß dadurch gelöst, daß die Vorstrecker auf eine obere Totpunkt-Ausgangslage eingestellt werden, in der ihre Kopfflächen einen Abstand oberhalb der Kunststofffolie einnehmen, aus der heraus sie über die gesamte Wegstrecke des Abstands bis zum Eintauchen in die Folie auf Nenngeschwindigkeit vorbeschleunigt werden und danach der Vorstreckerprozeß mit konstanter Geschwindigkeit der Nenndrehzahl des Vorstreckerantriebs durchgeführt wird. Es lassen sich hierdurch mehrere Vorteile gleichzeitig erreichen. Anders als bei einem üblichen, unmittelbar oberhalb des Folienniveaus ausgeführten oberen Totpunkt der Vorstrecker, die erfindungsgemäß vielmehr mit einem Abstand dazu eingestellt werden, lassen sich die Vorstrecker vorbeschleunigen und besitzen dann, wenn das Werkzeug geschlossen ist, bereits eine hohe, konstante Eintauchgeschwindigkeit. Hierdurch kann ein relativ großer Anteil des Folienmaterials aus dem Randbereich gezogen werden. Dieses herausgezogene Material lässt sich für die kritischen Zonen, den Wandungs- und Bodenbereich des Artikels bzw. Formteils, beim Thermoformprozeß nutzen. Damit kommt Folienmaterial aus dem Randbereich des Artikels zur Nutzung, das als unkritisch bezüglich der Steifigkeit anzusehen ist, und zwar einerseits aufgrund der entsprechenden Konturen und andererseits bedingt durch den im Randbereich schnellen Auskühlprozeß. Der das voreilende Beschleunigen ermöglichende Abstand der Vorstrecker zum Folienniveau bzw. der Oberfläche der zugeführten Folie entspricht der Wegstrecke, die der Vorstreckerantrieb benötigt, um sich und die werkzeugseitige Masse der Vorstreckvorrichtung auf Nenndrehzahl des Antriebs zu beschleunigen.

Die erfindungsgemäß erreichte, konstante Eintauchgeschwindigkeit der voreilend beschleunigten Vorstrecker optimiert somit die Materialverteilung hinsichtlich Steifigkeit des gesamten fertigen Artikels und unter optischen Gesichtspunkten im Bereich der Wandung der Artikel. Die Top loads liegen messbar deutlich höher und insbesondere sind selbst bei transparenten Folien keine oder allenfalls deutlich weniger Fließabsätze im Wandungsbereich sichtbar. Alternativ zu den erreichbaren höheren Top loads ließe sich die Dicke der eingesetzten Kunststofffolie verringern und somit Material einsparen, da sich aufgrund des erfindungsgemäßen Verfahrens die geforderte Steifigkeit selbst dann noch einhalten lässt.

Eine bevorzugte Ausführung der Erfindung sieht vor, daß die Vorstrecker teilsynchron zur Schließbewegung des Werkzeugs beschleunigt werden, vorzugsweise mittels elektronisch geregelten Verfahrantrieben, was reproduzierbare Verfahrcharakteristiken erlaubt. Alternativ lassen sich mechanisch gekoppelte Zwangsantriebe einsetzen. Dadurch, daß die Bewegungen von Vorstreckantriebsachse bzw. Vorstreckern und Werkzeug teilsynchron ausgeführt werden, werden die Eintauchzeit der Vorstrecker sowie die Zykluszeit des Formprozesses reduziert und damit die Ausstoßleistung erhöht, weil die Beschleunigungsphase der Vorstrecker schon während des Schließvorgangs des Werkzeuges stattfindet und der für die Formzeit bestimmende Vorstreckprozeß mit konstanter Nenndrehzahl des Vorstreckantriebs erfolgt.

Weitere Einzelheiten und Merkmale der Erfindung ergeben sich aus den Ansprüchen und der nachfolgenden Beschreibung eines in den Zeichnungen dargestellten Ausführungsbeispiels der Erfindung. Es zeigen:
Fig. 1 als Einzelheit eine Gesamtansicht eines durch einen Thermoformprozeß herzustellenden Artikels bzw. Formteils, hier beispielsweise ein Becher
Fig.2 als Enzelheit einer Thermoformmaschine im Längsschnitt einen Teil ihrer Vorstreckereinrichtung, zum Startzeitpunkt beim Schließen des zweiteiligen Werkzeugs mit dem Vorstrecker in der oberen Totpunkt-Ausgangslage gezeigt;
Fig. 3 die Vorstreckereinrichtung der Fig. 2 in der vor dem Vorstrecken geschlossenen Lage des Werkzeugs;
Fig. 4 die Vorstreckereinrichtung der Fig. 2 bzw. 3 bei Beendigung des Vorstreckens mit sich in der unteren Totpunkt-Lage befindenden Vorstreckem; und
Fig. 5a, 5b ein Geschwindigkeit/Zeit-Diagramm nach dem Stand der Technik (Fig. 5a) und bei erfindungsgemäß voreilend beschleunigten Vorstreckern (Fig.
5b).

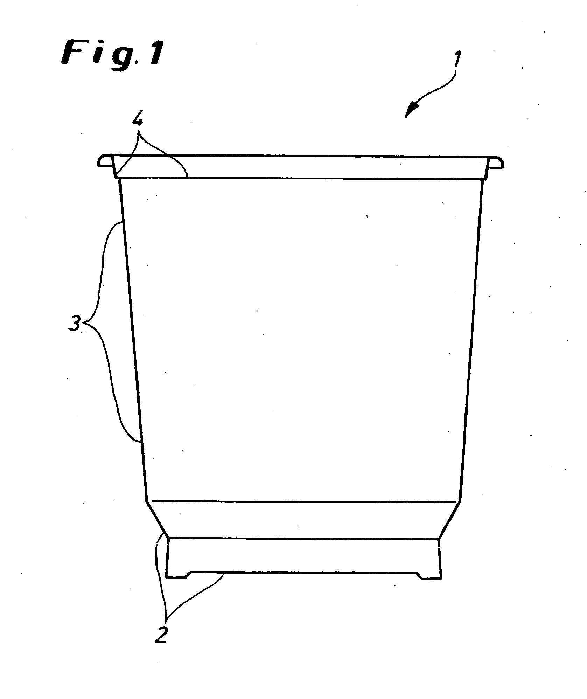

Die Fig. 1 zeigt als Beispiel einen Becher für ein durch einen Thermoformprozeß herzustellendes Formteil bzw. Artikel 1. Es wird hierbei angestrebt, daß die Materialverteilung am gesamten Artikel 1 möglichst gleichmäßig ist, d.h. sowohl im Bodenbereich 2 als auch im Wandungsbereich 3 und kopfseitig, am offenen Ende des Artikels 1 am Randbereich 4.

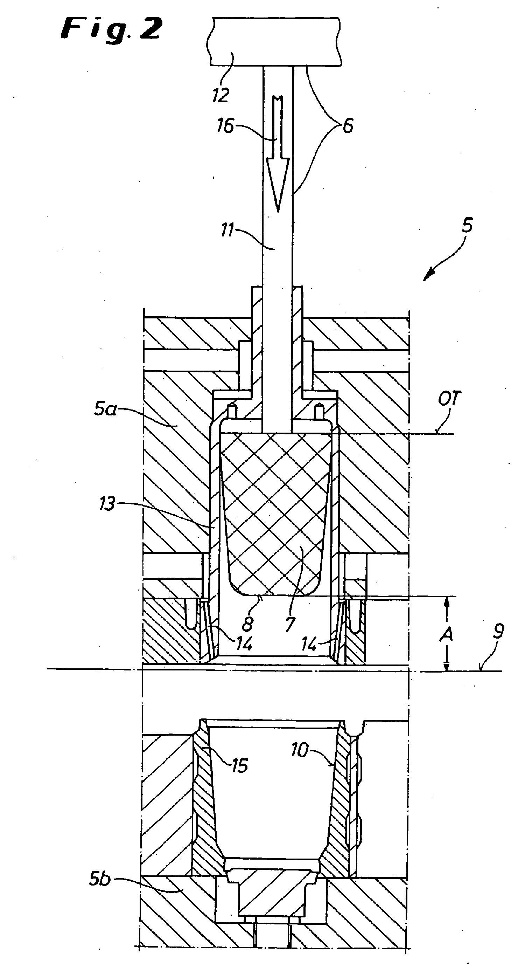

Das wird in einer als solche hinlänglich bekannten Thermoformmaschine, von der in den Fig. 2 bis 4 als Einzelheit deren aus einem Oberwerkzeug 5a und einem Unterwerkzeug 5b bestehendes Werkzeug 5 mit einer diesem zugeordneten Vorstreckereinrichtung 6 dargestellt ist, dadurch erreicht, daß die Vorstrecker 7 in ihrer in Fig. 2 dargestellten Ausgangslage auf einen oberen Totpunkt OT eingestellt werden, bei dem die Kopfflächen 8 der Vorstrecker 7 in einem Abstand A deutlich oberhalb einer in das geöffnete Werkzeug 5 zugeführten Kunststofffolie 9 verlaufen.

Die Vorstrecker 7, die in einer der Zahl der im Unterwerkzeug 5b vorgesehenen entsprechenden Anzahl Formnester 10 vorhanden sind, werden von in dem Oberwerkzeug 5a geführten Stangen 11 getragen, die mit einer gemeinsamen Platte 12 verbunden sind. Oberhalb der Platte 12 ist für die Vorstreckereinrichtung 6 ein hier nicht dargestellter Verfahrantrieb angeordnet und an eine Maschinen-Steuer- und/oder Regeleinheit angeschlossen. Der Verfahrantrieb umfasst üblich einen Servomotor mit einem Resolver oder Inkrementalgeber und eine Kupplung, über die sich eine Kugelrollspindel, die an die Platte 12 angreift, mit dazugehöriger Mutter auf und ab bewegen lässt. Das Oberwerkzeug 5a nimmt federnd gelagerte Niederhalter 13 auf und ist zudem mit auf die Kunststofffolie 9 gerichteten Formluftbohrungen 14 versehen. Das Unterwerkzeug 5b nimmt ein die Formnester 10 bereitstellendes, hier als Schnittstempel 15 ausgebildetes Formteil auf.

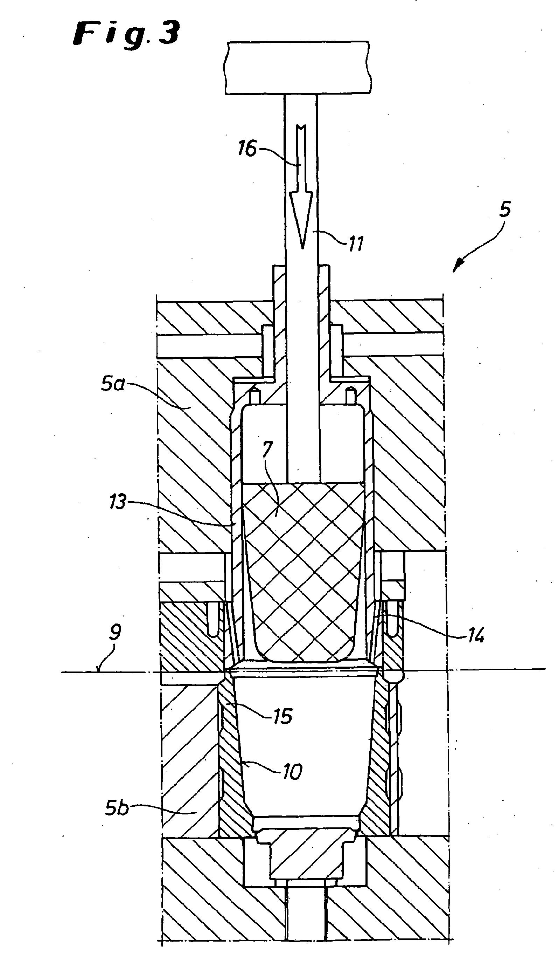

Beim Schließen des nach Fig. 2 geöffneten Werkzeugs 5 wird gleichzeitig der Verfahrantrieb der Vorstrecker 7 gestartet und diese während der Schließbewegung des Werkzeugs 5 voreilend in Pfeilrichtung 16 beschleunigt. Wenn das Werkzeug 5 die in Fig. 3 dargestellte, gerade geschlossene Position einnimmt und die Kunststofffolie 9 durch Unterstützung des Niederhalters 13 eingespannt wird, besitzen die Vorstrecker 7 bereits zu diesem Zeitpunkt eine hohe, konstante Eintauchgeschwindigkeit, die den sich anschließenden Vorgang des Vorstreckens der Kunststofffolie 9 zum Umformen zu dem fertigen Formteil bzw. Artikel 1 in der eingangs erläuterten Weise außerordentlich günstig beeinflusst.

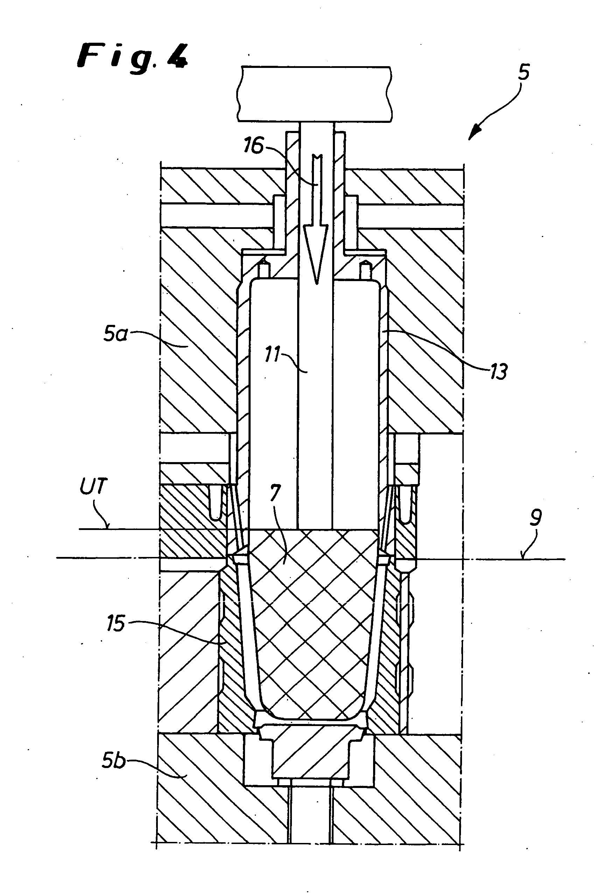

Das Ende des Vorstreckprozesses und Umformvorgangs ist in Fig. 4 dargestellt. Die in Pfeilrichtung 16 vollständig abgesenkten Vorstrecker 7 befinden sich in ihrer unteren Totpunktlage UT und haben unterstützt durch die über die Formluftbohrungen 14 zugeführte Druckluft die Kunststofffolie 9 an die gekühlte Form bzw. die Formnester 10 angelegt. Während die vorgestreckte und zu dem Artikel 1 umgeformte Kunststofffolie auskühlt, was eine gewisse Zeit in Anspruch nimmt, wird das Werkzeug 5 für einen erneuten Arbeitsgang geöffnet und die Vorstrecker 7 werden in dem stationären Oberwerkzeug 5a in die Ausganslage nach Fig. 2 zurückgefahren, so daß die Vorstrecker 7 erneut den für das voreilende Beschleunigen benötigten Abstand A oberhalb der für den nächsten Fertigungsprozeß zugeführten Kunststofffolie 9 einnehmen (vgl. Fig. 2). Unmittelbar nach dem Kühlen wird aber zunächst der fertige Artikel 1 durch einen weiteren vertikalen Kurzhub des Werkzeugs 5 mit Hilfe des Schnittstempels 15 des Unterwerkzeugs 5 b ausgestanzt und der Artikel 1 ausgeworfen bzw. austransportiert.

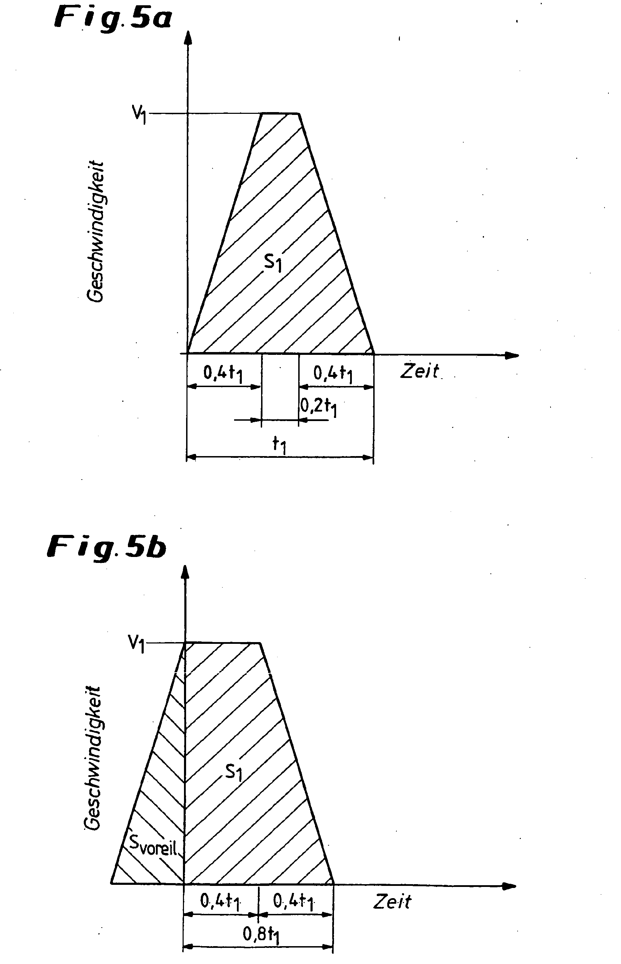

Den Geschwindigkeit/Zeit-Diagrammen der Fig. 5a und 5b lässt sich entnehmen, daß sich abgesehen von den artikelspezifisch erreichten Vorteilen der voreilend, teilsynchron mit dem Werkzeug 5 beschleunigten Vorstrecker 7 gegenüber dem Stand der Technik (Fig. 5a) eine deutlich geringere produktspezifische Formzeit erreichen lässt.

## Patentansprüche

1. Verfahren zum Betreiben einer Vorrichtung zum Herstellen von Formteilen, die aus einer im intermittierenden Transport zwischen ein aus einem Oberwerkzeug und einem Unterwerkzeug bestehenden Werkzeug zugeführten, erwärmten thermoplastischen Kunststofffolie mittels Druckluft unter Zuhilfenahme von nach dem Schließen des Werkzeugs pro Formnest in die Kunststofffolie eintauchenden, von einer Antriebseinrichtung beaufschlagten Vorstreckern tief gezogen werden,
**dadurch gekennzeichnet,**
**daß** die Vorstrecker (7) auf eine obere Totpunkt-Ausgangslage (OT) eingestellt werden, in der ihre Kopfflächen (8) einen Abstand (A) oberhalb der Kunststofffolie (9) einnehmen, aus der heraus sie über die gesamte Wegstrecke des Abstands (A) bis zum Eintauchen in die Kunststofffolie (9) auf Nenngeschwindigkeit beschleunigt werden und danach der Vorstreckprozeß mit konstanter Geschwindigkeit der Nenndrehzahl des Vorstreckerantriebs durchgeführt wird.

2. Verfahren nach Anspruch 1,
**dadurch gekennzeichnet,**
**daß** die Vorstrecker (7) teilsynchron zur Schließbewegung des Werkzeugs (5) beschleunigt werden.

3. Verfahren nach Anspruch 2,
**dadurch gekennzeichnet,**
**daß** zur teilsynchronen Bewegung des schließenden Werkzeugs (5) und der Vorstrecker (7) deren Verfahrantriebe elektronisch geregelt werden.

## Claims

1. A method for operating a device for producing shaped parts which are deep drawn from a heated thermoplastic plastic film, supplied in intermittent transport between a tool consisting of an upper tool and a lower tool, by means of compressed air with the aid of dies, acted upon by a drive device, that plunge, for each mould, into the plastic film after the tool is closed
**characterized in that**
the dies (7) are set in a top dead centre starting position (OT), in which their head faces (8) assume a distance (A) above the plastic film (9), from which they are accelerated to rated speed over the entire path length of the distance (A) until plunging into the plastic film (9) and thereafter the die process is carried out at a constant speed of the rated speed of the die drive.

2. The method according to Claim 1,
**characterized in that**
the dies (7) are accelerated partially in synchronism to the closing movement of the tool (5).

3. The method according to Claim 2,
**characterized in that**
for the partially synchronous movement of the closing tool (5) and of the dies (7), the conveying drives thereof are regulated electronically.

## Revendications

1. Procédé pour faire fonctionner un dispositif de fabrication de pièces moulées, qui sont embouties à partir d'un film de matière thermoplastique échauffé, alimenté par transport intermittent entre un outil consistant en un outil supérieur et en un outil inférieur au moyen d'air comprimé, en ayant recours à des dispositifs de pré-étirage plongeant pour chaque cavité de moule dans le film de matière plastique après la fermeture de l'outil et soumis à un dispositif d'entraînement,
**caractérisé en ce que**,
les dispositifs de pré-étirage (7) sont réglés sur une position de départ initiale supérieure au point mort (OT) dans laquelle leurs surfaces de tête (8) adoptent un écart (A) au dessus du film de matière plastique (9), à partir de laquelle ils sont accélérés à la vitesse nominale, sur tout le trajet de l'écart (A) jusqu'à la plongée dans le film de matière plastique (9), suite à quoi le processus de pré-étirage est réalisé, à une vitesse constante du régime nominal de l'entraînement des dispositifs de pré-étirage.

2. Procédé selon la revendication 1,
**caractérisé en ce que**,
les dispositifs de pré-étirage (7) sont accélérés de façon partiellement synchrone à la cinématique de fermeture de l'outil (5).

3. Procédé selon la revendication 2,
**caractérisé en ce que**,
pour la cinématique partiellement synchrone de l'outil (5) qui se ferme et des dispositifs de pré-étirage (7) leurs entraînements en déplacement sont réglés par voie électronique.
